Europäisches Patentamt

(19) European Patent Office

Office européen des brevets

(11) Publication number : **0 465 150 A1**

(12) **EUROPEAN PATENT APPLICATION**

(21) Application number : 91305867.3

(22) Date of filing : 28.06.91

(51) Int. Cl.⁵ : **F16L 58/10**

(30) Priority : 28.06.90 US 546471
13.05.91 US 699052

(43) Date of publication of application :
08.01.92 Bulletin 92/02

(84) Designated Contracting States :
**BE DE FR GB IT NL**

(71) Applicant : **THE KENDALL COMPANY**
**15 Hampshire Street**
**Mansfield, Massachusetts 02048 (US)**

(72) Inventor : **Dempster, William A., III**
**18 Chautauqua Avenue**
**Nashua, New Hampshire 03060 (US)**
Inventor : **Serra, Jerry M.**
**11 Clydesdale Road**
**Chelmsford, Massachusetts 01824 (US)**
Inventor : **DeCoste, Leonard D., Jr.**
**159 Franklin Street, C-8**
**Stoneham, Massachusetts 02180 (US)**
Inventor : **Kellner, Jordan D.**
**38 Grove Street**
**Wayland, Massachusetts 01778 (US)**

(74) Representative : **Kearney, Kevin David**
**Nicholas et al**
**KILBURN & STRODE 30 John Street**
**London, WC1N 2DD (GB)**

(54) **Tape coatings.**

(57)    A tape wrap system adapted for protecting tubular articles comprising an innerwrap covering the surface of the article to be protected and an outerwrap placed over said innerwrap, said innerwrap comprising an impact resistance polyolefin layer carrying a thermosetting adhesive layer on its inner surface and a layer comprising an heat fusable material on its outer surface, said outerwrap comprising an impact resistance polyolefin layer having an heat fusable layer on each surface thereof, said tape wrap system fusing said innerwrap and outerwrap together when heated and thereafter cooled, at least one of the inner or outer wraps being afforded by a blend of heat fusible material and impact resistance material or in that at least one of the heat fusible layers is a blend of heat fusible material and impact resistance material.

EP 0 465 150 A1

The present invention relates in general to protective coatings of tubular objects and specifically to protective coatings of pipes, and even more particularly to inground pipes.

The art is replete with protective pipeline coatings which provide varying degrees of resistance to impact, mechanical penetration, storage, indentation, abrasion, soil stresses and cathodic disbondment. Four major categories of protective pipeline coating are presently employed by the pipeline industry. They are:

(1) Hot Applied coal-tar enamel and asphalt mastics in relatively thick layers (100 mils) (2.5 mms) and commonly reinforced on the outside with glass or asbestos sheets. While such coatings are reported to represent over half of the plant-applied coatings in the United States, the hazards presented by their use foretell a decreasing popularity of this category. Further, the products show poor impact resistance, poor resistance to mechanical penetration, poor abrasion resistance, poor stability to soil stress conditions, and are only deemed fair in regard to indentation resistance, pipe bending, cathodic disbonding and resistance to hydrocarbon solvents.

(2) Extrusion coatings of a thermoplastic resin: (typically 40 mils (1.0 mms)). In practice, polyethylene has virtually a monopoly in this area. The technique may involve a seamless tubular extrusion over the pipe or a flat die sheet extrusion wrapped over the pipe. In most cases, the polymer is applied to a first-applied mastic layer (e.g. bituminous). These coatings show improved properties in regard to those mentioned above for the Hot-Applied enamel and coal tar coatings except insofar as resistance to hydrocarbon solvents.

(3) Fusion-bonded coatings - A thermoplastic powder is electrostatically applied to hot pipe where it "melts", adheres to the metal and fuses to itself. Only three basic materials have been widely usedpolyethylene, vinyl and epoxy powders with only the latter enjoying commercial success in the United States. Chemically, these are, generally, bis-phesol A polymers with epoxy end groups.

The epoxies require a thermal curing to the thermoset form and usually a catalyst is used in the system (e.g. amines, acids, boron halides, etc.). Frequently a liquid epoxy primer is used prior to the powder coating. Typically epoxy coatings have been 12-14 mils (0.3-0.35 mms) in thickness to provide at least acceptable resistance to cathodic disbonding, although in M.D. Simpson's paper "External Protection of Steel Pipes Using Epoxy Powder Coatings" (contribution SI) presented at the Second International Conference on the Internal and External Protection of Pipes (in England Sept. 1977) he states (page X2). "Bitumen coal tar and polyethylene are required to be applied relatively thick, but epoxy powder coatings give excellent protection with only 3 mm of coatings".

Apparently and obviously "3 mm" should be -0.3 mm-(12 mils) nevertheless, this value (i.e. 0.3 mm) still represents a relatively thick coating and its attendant disadvantages, e.g. brittleness and lack of flexibility and stresses at the pipe-epoxy interface.

In order to effect a satisfactory epoxy coating which would have satisfactory resistance to impact, mechanical penetration, indentation, abrasion, soil stresses, and cathodic disbondment it has been accepted that about a 12-14 mil (0.3-0.35 mms) thickness coating is required, which is very costly to produce.

(4) Tape Coating Systems (typically 20-80 mils (0.5-2.0 mms ) thick).

This method entails spirally wrapping a corrosion protective tape around a rubber based primer coating, referred to in the art as the innerwrap, followed by applying a second plastic outerwrap tape in a similar fashion to the innerwrap.

Many improvements on this tape coating system involving an inner and an outerwrap, have been advanced all of which have at their essence the primary task of promoting a tight bond thereby creating a coating which insulates the pipe from degradative external forces.

Accordingly, some tapes comprise polyethylene backings with a pressure-sensitive adhesives, or primer-activated adhesive coating thereon. The properties exhibited by these pipe coatings are similar to those of extrusion coated pipe coatings.

U.S. Patent No. 4213486 issued to Samour et al. and assigned to the present assignee, discloses a polyethylene outerwrap carrying a means for effecting bonding to the innerwrap epoxy layer wherein the means may be a hot melt adhesive or a pressure-sensitive adhesive.

U.S. Patent No. 3874418 issued to Hielema and assigned to the present assignee discloses:

"A method of coating a pipe and a pipe coated thereby, said method comprising the steps of progressively spirally winding a corrosion protective adhesive coated plastic tape onto the outer surface of the pipe with a spiral overlap, covering the coated pipe by progressively winding a film thereon with a predetermined overlap, and, as the film is wound onto the coated pipe, introducing and distributing under pressure a hot melted adhesive into intimate contact with the surface of the marginal portion of the trailing edge of the film and the surfaces of the overlapped portion along the leading edge thereof and of the portion of the tape immediately adjacent the leading edge of the film".

Still a further advancement in the art of tape coat systems is disclosed in U.S. Patent No. 4806400 issued to Sancaktar and assigned to the present assignee, wherein the improvement consists of tapering the opposed edges of the tape to enhance a tighter closure by being less subject to soil stress.

While all the aforementioned tape coat systems provide for successful protective coatings, they still comprise separate layers. Accordingly, the task of the present invention can be described as being directed to improving the present tape pipewrap systems against degradative external forces by providing for a continuous and seamless protective tape coating system.

Our own earlier filed EP 90309618.8 Serial No. 421607 published 10th April 1991 discloses a tape wrap system adapted for protecting tubular articles comprising an innerwrap adapted to cover the surface of the article to be protected and an outerwrap adapted to be placed over the said innerwrap, the said innerwrap comprising an impact-resistance layer carrying an adhesive layer on its inner surface and a layer comprising a heat fusible material on its outer surface, the said outerwrap comprising a carrier layer having a heat fusible layer on at least one surface thereof, the said tape wrap system being adapted to be applied to the tubular article with the heat fusible layer of the innerwrap disposed outwardly and the at least one heat fusible layer of the outerwrap being juxtaposed to the heat fusable layer of the innerwrap whereby on heating the juxtaposed heat fusable layers can be fused together.

In accordance with the present invention, the aforementioned task is solved in a simple and elegant manner by heat fusing a polymeric outerwrap to a polymeric innerwrap tape coating, by incorporating an heat fusible material into said inner and outerwrap, which when heated and cooled forms a completely closed protective tape coating, the innerwrap or the outerwrap or both comprising a blend of impact resistance material and heat fusibly material. The fact that a blend can be used instead of discrete layers is most unexpected and surprising.

As mentioned previously, the present invention relates in general to protective coatings of tubular objects and specifically to protective coatings for inground pipes.

The novel coating system of this invention comprises a polymeric innerwrap and a polymeric outerwrap. The polymeric innerwrap comprises an A/B/C or AB/C layered construction wherein the A layer consists essentially of an heat fusible material preferably from about 0.5 to about 10.0 mils (0.013-0.25 mms) thick; (preferred heat fusible materials are ethylene vinyl acetate having a melting point below the application temperature, ethyl methyl acrylate, and low density polyethylene, ethylene vinyl acetate being particularly preferred); the B layer consists essentially of an impact resistant polyolefin material, (preferably polyethylene, and most preferably a mixture of low and high density polyethylene) preferably from about 5.0 to about 30.0 mils (0.13-0.15 mms) thick; and the C layer consists essentially of an adhesive (preferably a thermosetting adhesive) preferably from about 2.0 to about 20.0 mils (0.051-0.51 mms) thick. Exemplary thermosetting adhesives are thermosetting rubber-based adhesives such as butyl rubber, natural rubber and styrene butadiene, butyl rubber and styrene butadiene, as well as those sold under the Trade Mark Kraton.

The adhesive layer C, in use, contacts the surface of the pipe.

In one embodiment the innerwrap comprises a layer ranging from about 5 to about 30 mils (0.13 to 0.75 mms) in thickness and having an A B blend corresponding to the aforementioned description, and may be a single layer of the blend.

The range of proportions of A to B in the blend in the innerwrap is preferably from 0.5:30 or 1:60 to 10:5 or 2:1 e.g. 0.5:5 or 1:10 to 10:30 or 1:3. A particularly preferred upper limit for both the inner and outer wrap of A:B is 4:1. The amount of impact resistance polymer (B) is preferably greater than the amount of heat fusible material (A), when impact resistance is of primary importance and the amount of (A) is preferably greater than the amount of (B) when sealability is of primary importance.

The novel outerwrap comprises an A/B/A or an A/B layer construction corresponding to the aforementioned description wherein the heat fusible A layer is preferably from about 0.5 to about 10.0 mils (0.013-0.25 mms) thick, the carrier or impact resistance layer B layer is preferably from about 5.0 to about 30.0 mils (0.13-0.75 mms) thick, and the A heat fusible layer is preferably from about 0.5 to about 10.0 mils (0.013-0.25 mms) thick. In still a further embodiment the outerwrap comprises a layer ranging from about 15 to about 30 mils (0.39-0.75 mms) in thickness and having an A B blend corresponding to the aforementioned description, and may be a single layer of the blend.

The range of proportions of A to B in the blend in the outerwrap is preferably from 0.5:30 or 1:60 to 20:5 or 4:1 e.g. 0.5:5 or 1:10 to 10:30 or 1:3, or 1:30 to 20:5 or 4:1 e.g. 1:5 to 20:30 or 2:3, especially 35:59 i.e. 1:1.7. A particularly preferred range of A:B is from 8:2 i.e. 4:1 to 2:8 i.e. 1:4.

The amount of impact resistance polymer is preferably greater than the amount of heat fusible material when impact resistance is of primary importance and the amount of (A) is preferably greater than the amount of (B) when sealability is of primary importance.

Preferably the content of B in the outer wrap is greater than the content of B in the inner wrap.

The manufacture of such coatings is well known in the art comprising such well known processes as calendering, extrusion and coextrusion, and as such comprises no part of the present invention. Both the inner and the outerwrap may contain additional ingredients performing specific desired functions. As illustrations of such additives mention may be made of fillers such as carbon black, zinc oxide, clays, chalk, whitings, calcium silicate, barium sulfate and the like in order to reduce the cost, increase the specific gravity, and/or to raise the viscosity; plasticizers and softeners such as mineral oil, lanolin, etc.; antioxidants, e.g. aromatic amine antioxidants, substituted phenols, hydroquinone (p-dihydroxybenzene), etc.; curing agents such as sulfur, organic peroxides and the like; accelerators; sequestering agents; biocides such as bactericides, etc.

The outer heat fusible layer A (or blend A/B) of the inner pipe wrap in use is juxtaposed to the inner heat fusible layer A (or blend A/B) of the outer pipe wrap and the two fusible layers can then be fused together.

The general process of producing a tape coating system comprising the novel invention includes well known plant tape coating methods. The pipe may be first pre-heated to approximately 200°F (93°C) and then prepared by any of the conventional ways known in the art such as by shot or grit blasting. Primer is then applied to the pipe by way of well known processes such as spraying or brushing. Next, the pipe is coated with the A/B/C or AB/C innerwrap by progressively spirally winding said tape onto the outer surface of the pipe thereby maintaining a marginal overlap. Notably, the innerwrap is applied in such a way that layer C is placed on the pipe while layer A or the AB blend layer is on the outer surface. Outerwrap A/B/A, A/B or AB/B/A or A/B/AB or AB/B or single layer blend A B is then applied to cover the coated pipe by progressively winding said tape onto the innerwrap coated pipe with a predetermined overlap. Next, flame or oven heat is applied to the coated pipe to attain a tape temperature to fuse the juxtaposed heat fusible materials e.g. ranging from about 225°F to about 325°F (107°C to 163°C). Lastly, the pipe is cooled by any of the known methods, exemplary of which is water cooling.

The present invention has particular application to small pipe segment patching. However, this application requires minor modifications in the aforementioned general process. First, the outerwrap must be crosslinked prior to pipe application. Crosslinking may be accomplished by any of the well known methods such as chemical, radiation, etc. Second, the inner and/or outerwrap is preferably applied by enveloping the pipe segment in the wrap(s) as opposed to spirally binding although spirally winding is not excluded; and overlapping the longitudinal edges of said wrap(s).

Third, the area to be fused may be protected with a heat resistant sheet prior to applying heat to prevent tape coating dimensional distortion. Said sheet comprises a composition able to resist the heat and flame of a torch for a time sufficient to allow the underlying outerwrap and innerwrap to melt and fuse to each other and to the pipe. Materials which have been found suitable are polyamide file ("Kapton"), trademark of Dupont) and aluminum foil. Other materials which could be used are Kevlar fabric, fibreglass fabric, laminate of fibreglass fabric with aluminum foil, flame resistant cotton, etc. Fibreglass fabric is particularly preferred. Last, flame or oven heat is applied to the coated pipe to attain a tape temperature ranging from about 225°F to about 325°F (107°C to 163°C).

In accordance with this novel process, the outerwrap is completely heat fused to the innerwrap thereby forming a uniform, continuous, and completely closed protective coating which fully protects against external degradative forces. More specifically, the preferred ethylene vinyl acetate components namely layers A or the A moiety in blend AB are heat fused, thereby creating a tight bond between the inner and outerwrap so as to achieve essentially a one layer seamless coating. Said seamless coating is highly advantageous in that no openings are present which when subjected to external forces create potential portals of entry for pipe corrosion factors. In sum, the present invention provides for a completely closed internal pipewrap environment which advantageously maintains pipe integrity.

Additionally, the present invention is particularly useful wrapping pipe segments, such as in joining the exposed ends of pipe segments before ground implantation. Notably, during pipe production pipes are cut into particular length to make transportation possible. Pipe coatings are either applied in the plant or in the field. If they are applied in plant the ends are left exposed. Thus before ground implantation the adjoining pipe ends need to be joined and coated. The present invention offers a particularly advantageious joint coating.

The following examples show by way of illustration and not limitation the novel characteristics of the present invention.

## EXAMPLE I (Innerwrap)

| Layer | Ingredient(s) | Thickness (mils) | (mils) |
|-------|--------------|------------------|--------|
| | | (mils) | (mms) |
| A | Ethylene Vinyl Acetate (softening point* 59°C) | 4 | 0.10 |
| B | 64% Low Density Polyethylene 32% High Density Polyethylene 2.5% Black Concentrate 1.0% Antioxidant/Low Density Polyethylene (5:95 ratio) | 11 | 0.275 |
| C | High Shear adhesive | 25 | 0.625 |

*as determined by the American Society for Testing and Material D-1525.

## EXAMPLE II (Outerwrap)

| Layer | Ingredient(s) | Thickness (mils) | (mils) |
|-------|--------------|------------------|--------|
| | | (mils) | (mms) |
| A | 96% Ethylene Vinyl Acetate (softening point 67°C) 4% White Concentrate | 3 | 0.075 |
| B | 66-96% High Density Polyethylene 0-30% Low Density Polyethylene 4% White Concentrate | 19 | 0.475 |
| A | 96% Ethylene vinyl Acetate 4% White Concentrate | 2.5 | 0.064 |

Coatings prepared by the previously mentioned process and in accordance with Example I and II were subjected to Cathodic Disbondment, Impact, and Soil Stress Testing. Prior art tapes comprising an outerwrap with a polyethylene backing and a pressure-sensitive adhesive coated thereon and an innerwrap consisting of polyethylene, prepared in the aforementioned process but omitting both the heating and cooling steps, were used as controls.

The following data illustrates the advantageous characteristics of the coating of the present invention and consequently the longevity and integrity of a pipe coated in accordance with the present invention.

## TABLE I

### Cathodic Disbondment (measured after 30 days)

| System | Temperature | | Cathodic Disbondment | |
|---|---|---|---|---|
| | $(^{o}F)$ | $(^{o}C)$ | $(inches^2)$ | $(cms^2)$ |
| Test Sample | 140 | 60 | 2.44 | 15.7 |
| Control | 140 | 60 | 6.00 | 38.7 |
| Test | 70 | 21 | 0.75 | 4.8 |
| Control | 70 | 21 | 0.6-0.75 | 3.9-4.8 |

## TABLE II

### Impact

### (administered and measured in accordance with ASTM G-14 guidelines)

| | in/lb | cms/kg |
|---|---|---|
| Test Sample | 60 | 69 |
| Control | 45 | 52 |

## TABLE III

### Soil Stress at $90^{o}F$ ($32^{o}C$)

(By the method disclosed in U.S. Patent No. 4483197 issued to Jordan Kellner and assigned to the present assignee herein, incorporated by reference)

| | |
|---|---|
| Test Sample | No peel back of outerwrap |
| Control | Outerwrap peeled back |

These test results demonstrate the advantageous characteristics of resistance to external degradative forces. Specifically, cathodic disbondment is more than 50% decreased at 140°F (60°C), which is particularly advantageous given the implantation of pipes in hot temperature regions. The results of impact testing show an advantage over the control yet the most important soil stress testing shows a highly significant improvement, no peeling of the outerwrap at 90°f (32°C). Resistance to soil stress is highly significant since pipeline tape deterioration and thus, corrosion, is mostly caused by soil stress imparted on the inground pipe.

Example III is illustrative of a single layer blend outerwrap.

## EXAMPLE III

| Ingredient | % |
|---|---|
| A - Ethylene vinyl acetate copolymer (softening point 59°C) | 35 |
| B - Low density polyethylene blend | 59 |
| White Concentrate | 5 |
| Antioxidant | 1 |

By way of recapitulation, heat fusing polymeric outerwrap tape to a polymeric innerwrap tape by incorporating an heat fusible moiety in both wraps, advantageously prolongs the integrity and hence longevity of inground pipes.

Since certain changes can be made without departing from the scope of the invention herein described, it is intended that all matter contained in the foregoing description, including the examples, shall be taken as illustrative and not in a limiting sense.

In its broadest aspects the invention provides a tape wrap system adapted for protecting tubular articles comprising an innerwrap covering the surface of the article to be protected and an outerwrap placed over the said innerwrap, the said innerwrap comprising an impact-resistance polyolefin layer carrying an adhesive layer on its inner surface and a layer comprising an heat fusible material on its outer surface, or a single layer comprising a blend of an impact resistant moiety and a heat fusible moiety carrying an adhesive layer on its inner surface, the said outerwrap comprising an impact-resistant polyolefin layer having an heat fusible layer on both surfaces or the inner surface thereof, or a blend of an impact resistant moiety and a heat fusible moiety, the said tape wrap system fusing the said innerwrap and outerwrap together when heated and thereafter cooled.

The said innerwrap may comprise A/B/C or AB/C layers as heretofore described.

The outer wrap preferably comprises A/B/A or A/B layers or an AB blend layer as heretofore described.

The heat fusible moiety is preferably ethylene vinyl acetate.

The impact resistant polyolefin is preferably polyethylene. The polyethylene is preferably a mixture of high and low density polyethylene. The AB blend layer maybe crosslinked.

The protective tape coating of the invention preferably has a total thickness from about 10 to about 200 mils (0.25 to 5.1 mms).

The invention extends to a tape coated article in which the said innerwrap comprises layers A/B/C or AB/C as heretofore described; and the said outerwrap comprises A/B/A, A/B or a single AB blend layer as heretofore described.

The invention also extends to a process for externally protecting pipes which comprises the steps of :

(a) cleaning the said pipe;

(b) applying primer to the said pipe;

(c) wrapping the said pipe with the protective coating of the present invention;

(d) heating the said pipe to attain a protective coating temperature ranging from about 225°f (107°C) to about 325°F (160°C); thereafter

(e) cooling the said pipe.

The process preferably further comprises the step of crosslinking the said AB blend layer prior to wrapping the said pipe.

The pipe is preferably first pre-heated.

The process of wrapping preferably comprises first spirally wrapping the said innerwrap while maintaining a marginal overlap and second spirally wrapping the said outerwrap layer over the said innerwrap layer while maintaining a marginal overlap.

The wrapping preferably comprises first spirally wrapping the said inner wrap while maintaining a marginal overlap and second wrapping the said outerwrap sheet around the surface of a portion of the said pipe and overlapping the longitudinal edges of the said outerwrap sheet and applying heat to fuse the said outerwrap to the said innerwrap. The process may alternatively comprise first wrapping the said innerwrap sheet around the surface of a portion of the said pipe and overlapping the longitudinal edges of the said innerwrap, and second wrapping the said outerwrap sheet around the surface of a portion of the said pipe and overlapping the longitudinal edges of the said outerwrap sheet and applying heat to fuse the said outerwrap to the said innerwrap.

The AB blend layer is preferably crosslinked before wrapping the said layer onto the said pipe.

Preferably a heat resistant film is applied to the outerwrap prior to heat fusing to prevent dimensional distortion.

The heat resistant film preferably consists of fibreglass.

The invention also extends to a protective pipewrap comprising a blend of an impact resistant moiety and a heat fusible moiety or an impact resistant polyolefin layer having a heat fusible layer which is a blend of an impact resistant moiety and a heat fusible moiety one or both surfaces.

The invention also extends to a protective pipewrap comprising an impact resistance polyolefin layer carrying an adhesive layer on its inner surface and a layer comprising a heat fusible material on its outer surface comprising a blend of an impact resistant moiety and a heat fusible moiety, or a simple layer comprising a blend of an impact resistant moiety and a heat fusible moiety carrying an adhesive layer on its inner surface.

## Claims

1. A tape wrap system adapted for protecting tubular articles comprising an innerwrap adapted to cover the surface of the article to be protected and an outerwrap adapted to be placed over the said innerwrap, the said innerwrap comprising impact-resistance material carrying an adhesive layer on its inner surface and a layer comprising a heat fusible material on its outer surface, the said outerwrap comprising a carrier layer having a heat fusible layer on at least one surface thereof, the said tape wrap system being adapted to be applied to the tubular article with the heat fusible layer of the innerwrap disposed outwardly and the at least one heat fusible layer of the outerwrap being juxtaposed to the heat fusible layer of the innerwrap whereby on heating the juxtaposed heat fusible layers can be fused together, characterised in that at least one of the inner or outer wraps is afforded by a blend of heat fusible material and impact resistance material or in that at least one of the heat fusible layers is a blend of heat fusible material and impact resistance material.

2. A tape wrap system as claimed in Claim 1 in which both surfaces of the carrier layer of the outerwrap carry heat fusible layers which may be the same or different.

3. A tape wrap system as claimed in Claim 1 or Claim 2 characterised in that the carrier layer in the outerwrap is an impact-resistance layer.

4. A tape wrap system as claimed in Claim 1, 2 or 3 characterised in that the impact-resistance layers in the inner and outer wraps are of polyolefin which may be the same or different in each layer.

5. A tape wrap system as claimed in Claim 1, 2, 3 or 4 characterised in that the innerwrap consists of a layer which is a blend of heat fusible material and impact resistance material or such a layer carried on a layer of impact resistance material.

6. A tape wrap system as claimed in any one of Claims 1 to 5 characterised in that the outerwrap consists of a layer which is a blend of heat fusible material and impact resistance material or such a layer carried on one or both faces of a layer of impact resistance material.

7. A tape wrap system as claimed in any one of Claims 1 to 6 characterised in that the ratio of heat fusible material to impact resistance material in the blend is in the range 1:60 to 4:1.

8. A tape wrap system as claimed in Claim 7 characterised in that the ratio of heat fusible material to impact resistance material is in the range 1:3 to 2:1.

9. A method of coating a tubular article which comprises wrapping around a prepared surface of the article an innerwrap as claimed in any one of Claims 1 to 8 with its adhesive layer contacting the surface of the article, wrapping an outerwrap as claimed in any one of Claims 1 to 7 with a heat fusible surface juxtaposed to the heat fusible outer surface of the innerwrap and heating the assembly so as to fuse together the two juxtaposed heat fusible layers.

10. A tape coated article comprising a pipe whenever coated by a method as claimed in Claim 9.

**EP 0 465 150 A1**

**European Patent Office**

**EUROPEAN SEARCH REPORT**

Application Number

EP 91 30 5867

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,D | EP-A-0 421 607 (THE KENDALL COMP.) | | F16L58/10 |
| X | * the whole document * | 1-4 | |
| A | | 9-10 | |
| | | | |
| | FR-A-2 213 356 (DENSO-CHIMIE) | | |
| A | * page 1, line 5 - line 17 * | 1 | |
| | --- | | |
| | AT-A-364 972 (PALKOVITS) | | |
| A | * the whole document * | 1 | |
| | ----- | | |

TECHNICAL FIELDS SEARCHED (Int. Cl.5 )

F16L
B29C

The present search report has been drawn up for all claims

| Place of search | Date of completion of the search | Examiner |
|---|---|---|
| THE HAGUE | 26 SEPTEMBER 1991 | NARMINIO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

10